(19) Europäisches Patentamt
European Patent Office
Office européen des brevets

(11) EP 3 183 275 B1

(12) **EUROPÄISCHE PATENTSCHRIFT**

(45) Veröffentlichungstag und Bekanntmachung des Hinweises auf die Patenterteilung:
**23.05.2018 Patentblatt 2018/21**

(21) Anmeldenummer: **15760385.3**

(22) Anmeldetag: **17.08.2015**

(51) Int Cl.:
*C08F 8/36* (2006.01) *C08F 8/30* (2006.01)
*C08F 8/02* (2006.01) *C08F 8/40* (2006.01)
*C08F 212/08* (2006.01) *C08F 212/36* (2006.01)
*C02F 1/28* (2006.01) *C01B 33/023* (2006.01)
*B01J 49/50* (2017.01) *B01J 45/00* (2006.01)
*B01D 15/00* (2006.01)

(86) Internationale Anmeldenummer:
**PCT/EP2015/068827**

(87) Internationale Veröffentlichungsnummer:
**WO 2016/026804 (25.02.2016 Gazette 2016/08)**

(54) **SULFONIERTE, AMINOMETHYLIERTE CHELATHARZE**

SULPHONATED, AMINOMETHYLATED CHELATE RESINS

RÉSINE DE CHÉLATE SULFURISÉE, AMINOÉTHYLÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.08.2014 EP 14181606**

(43) Veröffentlichungstag der Anmeldung:
**28.06.2017 Patentblatt 2017/26**

(73) Patentinhaber: **Lanxess Deutschland GmbH**
**50569 Köln (DE)**

(72) Erfinder:
- **KLIPPER, Reinhold**
  **50933 Köln (DE)**
- **NEUFEIND, Stefan**
  **51065 Köln (DE)**

(56) Entgegenhaltungen:
**EP-A2- 1 078 690 US-A1- 2013 139 649**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 183 275 B1

**Beschreibung**

Die vorliegende Erfindung betrifft sulfonierte, aminomethylierte Chelatharze, ein Verfahren zu deren Herstellung, sowie deren Verwendung zur Gewinnung und Aufreinigung von Metallen, insbesondere Seltenen Erden aus wässrigen Lösungen und organischen Flüssigkeiten und zur Herstellung von hochreinem Silizium.
Neuartige Chelatharze sind Ziel intensiver Forschung, da sie z.B. ein erhebliches Nutzungspotential im Bereich der Wasseraufreinigung oder der Gewinnung von Metallen aufweisen. US 2013/139649 A1 beschreibt Chelatharze enthaltend Methylenaminoethylsulfonsäuregruppen. Aus der EP-A 1078690 ist ein Verfahren zur Herstellung eines aminomethylierten Chelatharzes bekannt, welches zur Adsorption von Schwermetallen und Edelmetallen geeignet ist. Dieses Verfahren beinhaltet unter anderem einen Schritt zur Einführung einer Aminomethylgruppe durch Umsetzung von Phthalimid und Formalin in Gegenwart einer katalytischen Menge eines $SO_3$ Lieferanten und nachfolgender Säure oder Base katalytischer Hydrolyse. Neben der Tatsache, dass das eingesetzte $SO_3$ lediglich einen katalytischen Effekt besitzt, wurde bisher der Einsatz größerer Mengen an $SO_3$ vermieden, um die Struktur und Stabilität des entstehenden phthalimidomethylierten Harzes nicht zu gefährden.
Überraschend wurde nun gefunden, dass unter Einsatz erheblich größerer Mengen an $SO_3$ nicht nur die katalytische Einführung der Phthalimidomethylgruppe ermöglicht wurde, sondern das Harz gleichzeitig sulfoniert werden konnte, ohne die Struktur des Harzes essentiell zu beschädigen.
Gegenstand der vorliegenden Erfindung ist daher ein Chelatharz enthaltend funktionelle Gruppen des Strukturelements (I)

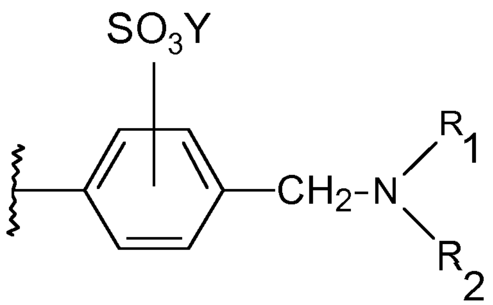

(I)

worin ∿ für das Polymergerüst steht und $R_1$ und $R_2$ unabhängig voneinander für $-CH_2COOX$, $-CH_2PO(OX^1)_2$, $-CH_2PO(OH)OX^2$, $-(CS)NH_2$, $-CH_2$-Pyridyl oder Wasserstoff stehen, wobei $R_1$ und $R_2$ nicht beide gleichzeitig Wasserstoff sein können und X, $X^1$, $X^2$ und Y unabhängig voneinander für Wasserstoff, Natrium oder Kalium stehen.

Bevorzugt sind $R_1$ und $R_2$ unabhängig voneinander = $-CH_2PO(OX^1)_2$, $-CH_2PO(OH)OX^2$, $CH_2COOX$ oder Wasserstoff, wobei $R_1$ und $R_2$ nicht beide gleichzeitig Wasserstoff sein können. Besonders bevorzugt ist $R_1$ = Wasserstoff, $-CH_2PO(OX^1)_2$ oder $-CH_2PO(OH)OX^2$ und $R_2$ = $-CH_2PO(OX^2)_2$ oder $-CH_2PO(OH)OX^2$. Ganz besonders bevorzugt ist $R_1$ = Wasserstoff und $R_2$ = $-CH_2PO(OX^2)_2$ oder $-CH_2PO(OH)OX^2$. X, $X^1$, $X^2$ und Y stehen unabhängig voneinander für Wasserstoff, Natrium oder Kalium. Bevorzugt stehen X, $X^1$ und $X^2$ unabhängig voneinander für Wasserstoff. Bevorzugt sind $X^1$ und $X^2$ gleich. Bevorzugt steht Y für Wasserstoff.

Bevorzugt ist der Phenylring in der Strukturformel (I) in ortho Stellung zur Methylengruppe durch einen Sulfonsäurerest substituiert.

Weiterhin umfasst die Erfindung ein Verfahren zur Herstellung der Chelatharze enthaltend funktionelle Gruppen des Strukturelements (I)

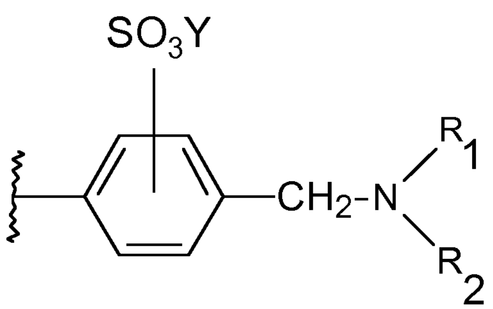

(I)

worin $\sim$ für das Polymergerüst steht und $R_1$ und $R_2$ unabhängig voneinander für $-CH_2COOX$, $-CH_2PO(OX^1)_2$, $-CH_2PO(OH)OX^2$, $-(CS)NH_2$, $-CH_2$-Pyridyl oder Wasserstoff stehen, wobei $R_1$ und $R_2$ nicht beide gleichzeitig Wasserstoff sein können und X, $X^1$, $X^2$ und Y unabhängig voneinander für Wasserstoff, Natrium oder Kalium stehen, dadurch gekennzeichnet, dass man

a) Monomertröpfchen aus wenigstens einer monovinylaromatischen Verbindung und wenigstens einer polyvinylaromatischen Verbindung sowie wenigstens einem Initiator oder einer Initiatorkombination zu einem Perlpolymerisat umsetzt,

b) das Perlpolymerisat mit Phthalimid in Gegenwart von Oleum phthalimidomethyliert und sulfoniert wird, wobei die Menge an freiem $SO_3$ mindestens 0,69 mol bezogen auf 1 mol Phthalimid ist,

c) das phthalimidomethylierte, sulfonierte Perlpolymerisat zu aminomethyliertem, sulfoniertem Perlpolymerisat umsetzt und

d) das aminomethylierte, sulfonierte Perlpolymerisat zu Chelatharzen enthaltend funktionelle Gruppen des Strukturelements (I) reagieren lässt.

Bevorzugt lassen sich die Chelatharze enthaltend funktionelle Gruppen des Strukturelements (I) durch das Herstellungsverfahren an sich charakterisieren.

Gegenstand der vorliegenden Erfindung sind deshalb auch Chelatharze enthaltend funktionelle Gruppen des Strukturelements (I)

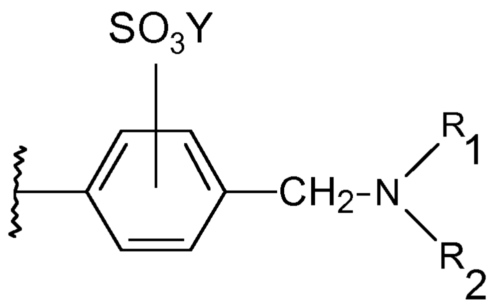

(I)

worin $\sim$ für das Polymergerüst steht und $R_1$ und $R_2$ unabhängig voneinander für $-CH_2COOX$, $-CH_2PO(OX^1)_2$, $-CH_2PO(OH)OX^2$, $-(CS)NH_2$, $-CH_2$-Pyridyl oder Wasserstoff stehen, wobei $R_1$ und $R_2$ nicht beide gleichzeitig Wasserstoff sein können und X, $X^1$, $X^2$ und Y unabhängig voneinander für Wasserstoff, Natrium oder Kalium stehen, hergestellt dadurch, dass

a) Monomertröpfchen aus wenigstens einer monovinylaromatischen Verbindung und wenigstens einer polyvinylaromatischen Verbindung sowie wenigstens einem Initiator oder einer Initiatorkombination zu einem Perlpolymerisat umgesetzt werden,

b) das Perlpolymerisat mit Phthalimid in Gegenwart von Oleum phthalimidomethyliert und sulfoniert wird, wobei die Menge an freiem $SO_3$ mindestens 0,69 mol bezogen auf 1 mol Phthalimid ist,

c) das phthalimidomethylierte, sulfonierte Perlpolymerisat zu aminomethyliertem, sulfonierten Perlpolymerisat umsetzt und

d) das aminomethylierte, sulfonierte Perlpolymerisat zu Chelatharzen enthaltend funktionelle Gruppen des Strukturelements (I) reagieren lässt.

Chelatharze im Sinne der Erfindung sind Polymere auf Basis mindestens einer monovinylaromatischen Verbindung und mindestens einer polyvinylaromatischen Verbindung. Bevorzugt sind Chelatharze im Sinne der Erfindung Polymere aus Styrol, Divinylbenzol und Ethylstyrol.

Der Rahmen der Erfindung umfasst alle oben stehenden und im Folgenden aufgeführten, allgemeinen oder in

Vorzugsbereichen genannten Restedefinitionen, Parameter und Erläuterungen untereinander, also auch zwischen den jeweiligen Bereichen und Vorzugsbereichen in beliebiger Kombination.

In Verfahrensschritt a) wird wenigstens eine monovinylaromatische Verbindung und wenigstens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen.

Als monovinylaromatische Verbindungen im Sinne der vorliegenden Erfindung werden in Verfahrensschritt a) bevorzugt Styrol, Vinyltoluol, Ethylstyrol, $\alpha$-Methylstyrol, Chlorstyrol, Chlormethylstyrol, Acrylsäurealkylester oder Methacrylsäurealkylester, eingesetzt.

Insbesondere bevorzugt wird Styrol oder Mischungen aus Styrol mit den vorgenannten Monomeren, bevorzugt mit Ethylstyrol, eingesetzt.

Bevorzugte polyvinylaromatische Verbindungen im Sinne der vorliegenden Erfindung sind für Verfahrensschritt a) Divinylbenzol, Divinyltoluol, Trivinylbenzol, Divinylnaphtalin, Trivinylnaphtalin, 1,7-Octadien, 1,5-Hexadien, Ethylenglycoldimethacrylat, Trimethylolpropantrimethacrylat oder Allylmethacrylat, insbesondere bevorzugt Divinylbenzol.

Die polyvinylaromatischen Verbindungen werden bevorzugt in Mengen von 1-20 Gew.-%, besonders bevorzugt 2-12 Gew.-%, insbesondere bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des Perlpolymerisat ausgewählt. Im Falle des Einsatzes von Divinylbenzol sind kommerzielle Divinylbenzolqualitäten, die neben den Isomeren des Divinylbenzols auch Ethylvinylbenzol enthalten, ausreichend.

Der Begriff Perlpolymerisat stellt im Sinne der Erfindung ein kugelförmiges, vernetztes Polymerisat dar.

Die Begriffe mikroporös oder gelförmig bzw. makroporös sind in der Fachliteratur bereits eingehend beschrieben worden.

Die Ausbildung makroporöser Perlpolymerisate erfolgt durch Zusatz von Inertmaterialien, bevorzugt wenigstens einem Porogens, zu der Monomermischung bei der Polymerisation, um im Perlpolymerisat eine makroporöse Struktur zu erzeugen. Hierfür sind organische Lösungsmittel geeignet, die das entstandene Perlpolymerisat schlecht lösen bzw. quellen. Insbesonders bevorzugte Porogene sind Hexan, Octan, Isooctan, Isododecan, Methylethylketon, Butanol oder Octanol und deren Isomeren. Es sind vor allem organische Substanzen geeignet, die sich im Monomeren lösen, das Perlpolymerisat aber schlecht lösen bzw. quellen (Fällmittel für Polymere) beispielsweise aliphatische Kohlenwasserstoffe (Farbenfabriken Bayer DBP 1045102 , 1957; DBP 1113570, 1957).

In US 4 382 124 werden als Porogen die ebenfalls im Rahmen der vorliegenden Erfindung bevorzugt einzusetzende Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Bevorzugt wird in Verfahrensschritt a) mindestens ein Porogen zugesetzt. Bevorzugt weisen die Perlpolymerisate und die Chelatharze enthaltend funktionelle Gruppen des Strukturelements (I) eine makroporöse Struktur auf.

Die gemäß Verfahrensschritt a) hergestellten Perlpolymerisate können in heterodisperser oder monodisperser Form hergestellt werden.

Die Herstellung heterodisperser Perlpolymerisate geschieht nach allgemeinen, dem Fachmann bekannten Verfahren, z.B. mit Hilfe der Suspensionspolymerisation.

Bevorzugt werden monodisperse Perlpolymerisate in Verfahrensschritt a) hergestellt.

Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von + 10 % des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

In einer bevorzugten Ausführungsform der vorliegenden Erfindung kommen in Verfahrensschritt a) mikroverkapselte Monomertröpfchen bei der Herstellung von monodispersen Perlpolymerisaten zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane oder Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind

bekannt. Bevorzugt ist die Phasengrenzflächenkondensation, bei der eine im Monomertröpfchen gelöste Reaktivkomponente (insbesondere ein Isocyanat oder ein Säurechlorid) mit einer zweiten, in der wässrigen Phase gelösten Reaktivkomponente (insbesondere einem Amin), zur Reaktion gebracht wird.

Die gegebenenfalls mikroverkapselten, monodispersen Monomertröpfchen enthalten wenigstens einen Initiator oder Mischungen von Initiatoren (Initiatorkombination) zur Auslösung der Polymerisation. Für das erfindungsgemäße Verfahren bevorzugte Initiatoren sind Peroxyverbindungen, insbesondere bevorzugt Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-etylhexan, sowie Azoverbindungen wie 2,2'-Azo-bis(isobutyronitril) oder 2,2'-Azobis(2-methylisobutyronitril).

Die Initiatoren werden bevorzugt in Mengen von 0,05 bis 2,5 Gew.-%, besonders bevorzugt 0,1 bis 1,5 Gew.-%, bezogen auf die Monomeren-Mischung, angewendet.

Das gegebenenfalls, monodispersen, mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Bei der Herstellung von monodispersen Perlpolymerisaten in Verfahrensschritt a) kann die wässrige Phase in einer weiteren bevorzugten Ausführungsform einen gelösten Polymerisationsinhibitor enthalten. Als Inhibitoren kommen in diesem Fall sowohl anorganische als auch organische Stoffe in Frage. Bevorzugte anorganische Inhibitoren sind Stickstoffverbindungen, insbesondere bevorzugt Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere bevorzugte organische Inhibitoren sind stickstoffhaltige Verbindungen. Insbesondere bevorzugt sind Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wässrige Phase), vorzugsweise 10 - 500 ppm, besonders bevorzugt 10 - 250 ppm.

Die Polymerisation der gegebenenfalls mikroverkapselten monodispersen, Monomertröpfchen zum monodispersen Perlpolymerisat erfolgt, wie bereits oben erwähnt, gegebenenfalls bzw. bevorzugt in Anwesenheit eines oder mehrerer Schutzkolloide in der wässrigen Phase. Als Schutzkolloide eignen sich natürliche oder synthetische wasserlösliche Polymere, bevorzugt Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Bevorzugt sind ferner Cellulosederivate, insbesondere Celluloseester und Celluloseether, wie Carboxymethylcellulose Methylhydroxyethylcellulose, Methylhydroxypropylcellulose und Hydroxyethylcellulose. Insbesondere bevorzugt ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum monodispersen Perlpolymerisat kann in einer alternativen bevorzugten Ausführungsform in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borat in der wässrigen Phase beträgt 0,5 - 500 mmol/l, vorzugsweise 2,5 - 100 mmol/l.

Die Rührgeschwindigkeit bei der Polymerisation zum monodispersen Perlpolymerisat ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt 1 : 0,75 bis 1 : 20, vorzugsweise 1 : 1 bis 1 : 6.

Die Polymerisationstemperatur zum monodispersen Perlpolymerisat richtet sich nach der Zerfallstemperatur des eingesetzten Initiators. Sie liegt im Allgemeinen zwischen 50 bis 180°C, vorzugsweise zwischen 55 und 130°C. Die Polymerisation dauert 0,5 bis etwa 20 Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das monodisperse Perlpolymerisat mit üblichen Methoden, beispielsweise durch Filtrieren oder Dekantieren, isoliert und

gegebenenfalls gewaschen.

Die Herstellung der monodispersen Perlpolymerisate mit Hilfe des Jetting Prinzipes oder des Seed-Feed-Prinzip ist aus dem Stand der Technik bekannt und z.B. in US-A4 444 961, EP-A 0 046 535, US 4 419 245 oder WO 93/12167 beschrieben, deren Inhalte von der vorliegenden Anmeldung hinsichtlich der Herstellung von monodispersen Perlpolymerisaten von der vorliegenden Anmeldung mit umfasst werden.

Bevorzugt erfolgt die Herstellung der monodispersen Perlpolymerisate mit Hilfe des Jetting Prinzipes oder des Seed-Feed-Prinzip.

Im Verfahrensschritt b) wird zunächst das Amidomethylierungsreagens hergestellt. Dazu wird Phthalimid in einem Lösungsmittel gelöst und mit Formalin versetzt. Anschließend wird unter Wasserabspaltung hieraus ein Bis-(Phthalimido)ether gebildet. Der Bis-(Phthalimido)ether kann gegebenenfalls zum Phthalimidoester umgesetzt werden. Als Lösungsmittel kommen im Verfahrensschritt b) inerte Lösungsmittel zum Einsatz, die geeignet sind, das Polymer zu quellen, bevorzugt chlorierte Kohlenwasserstoffe, besonders bevorzugt Dichlorethan oder Methylenchlorid.

Im Verfahrensschritt b) wird das Perlpolymerisat mit Phthalimid kondensiert. Als Katalysator und Sulfonierungsmittel wird hierbei Oleum eingesetzt. Mit Hilfe des Oleums wird ein $SO_3$-Addukt des Phthalimids im inerten Lösungsmittel hergestellt und die Sulfonierung durchgeführt.

In der Regel wird hierbei so vorgegangen, dass nach Bildung des Bis-(Phthalimido)ether das Oleum zugegeben wird und danach das Perlpolymerisat eingetragen wird. Die Zugabe kann aber auch in einer anderen Reihenfolge erfolgen. Bevorzugt wird nach Bildung des Bis-(Phthalimido)ethers das Oleum zugegeben und danach das Perlpolymerisat eingetragen.

Oleum kann in unterschiedlichsten Konzentrationen an freiem $SO_3$ eingesetzt werden. Handelsüblich sind Konzentration von 24-, 34- und 65 Gew.% freies $SO_3$ in konzentrierter Schwefelsäure. Besonders bevorzugt wird Oleum mit einem Anteil an freiem $SO_3$ von 65 Gew.% eingesetzt.

Falls Oleum mit einer Menge an freiem $SO_3$ von 65 Gew.% eingesetzt wird, beträgt die Menge an Oleum, die in Verfahrensschritt b) eingesetzt wird, im Allgemeinen 0,59 Gramm bis 1,5 Gramm Oleum zu 1 Gramm Phthalimid, kann aber auch kleiner oder größer sein. Bevorzugt beträgt die Menge 0,59 Gramm bis 1,25 Gramm Oleum pro Gramm Phthalimid. falls Oleum mit einer Menge an freiem $SO_3$ von 65 Gew.% eingesetzt wird.

Die Menge an Phthalimid die in Verfahrensschritt b) eingesetzt wird beträgt im Allgemeinen 0,3 bis 1,6 mol pro Mol Pthalimid, kann aber auch kleiner oder größer sein. Bevorzugt werden 0,5 bis 1,1 mol Phthalimid pro mol Perlpolymerisat eingesetzt.

Die katalytische Einführung der Amidomethylgruppe und die Sulfonierung erfolgt im Verfahrensschritt b) bei Temperaturen von 40°C bis 80 °C, bevorzugt bei Temperaturen von 50°C bis 70 °C. Die Menge an freiem $SO_3$ bezogen auf 1 mol Phthalimid beträgt zwischen 0,69 mol bis 1,5 mol. Bevorzugt beträgt die Menge an freiem $SO_3$ im Verfahrensschritt b) bezogen auf 1 mol Phthalimid 0,69 mol bis 1,2 Mol.

Der Substitutionsgrad in der vorliegenden Anmeldung gibt das molare Verhältnis der aromatischen Gruppen des Perlpolymerisates zu den Aminomethylgruppen an.

Der Substitutionsgrad beträgt im Allgemeinen 0,3 bis 1,5. Der Substitutionsgrad kann aber auch kleiner oder größer sein. Bevorzugt beträgt der Substitutionsgrad 0,6 bis 1,1.

Der Sulfonierungsgrad in der vorliegenden Anmeldung gibt das molare Verhältnis der aromatische Gruppen des Perlpolymerisates zu den Sulfonsäuregruppen an.

Das Verhältnis des Sulfonierungsgrades zu dem Substitutionsgrad beträgt im Allgemeinen zwischen 0,1 bis 1,0, kann allerdings auch größer oder kleiner sein. Bevorzugt liegt das Verhältnis des Sulfonierungsgrades zu dem Substitutionsgrad zwischen 0,3 und 0,5.

Die Abspaltung des Phthalsäurerestes und damit die Freilegung der Aminomethylgruppe erfolgt im Verfahrensschritt c) durch Behandeln des phthalimidomethylierten, sulfonierten Perlpolymerisates mit wässrigen oder alkoholischen Lösungen eines Alkalihydroxids, wie Natriumhydroxid oder Kaliumhydroxid bei Temperaturen von 100 bis 250°C, vorzugsweise von 120 bis 190°C. Die Konzentration der Natronlauge liegt im Bereich von 10 bis 50 Gew.-%, vorzugsweise von 20 bis 40 Gew.-%.

Das dabei entstehende aminomethylierte, sulfonierte Perlpolymerisat wird schließlich mit vollentsalztem Wasser alkalifrei gewaschen.

Die Umsetzung der im Verfahrensschritt c) erhaltenen aminomethylgruppenhaltiger, sulfonierter Perlpolymerisate zu den Chelatharzen enthaltend funktionelle Gruppen des Strukturelements (I) erfolgt nach gängigen, dem Fachmann bekannten Verfahren.

Bevorzugt erfolgt die Herstellung der erfindungsgemäßen Chelatharzen enthaltend funktionelle Gruppen des Strukturelements (I), wobei $R_1$ und $R_2$ unabhängig voneinander = $-CH_2COOX$ oder H sind, aber $R_1$ und $R_2$ nicht gleichzeitig für Wasserstoff stehen können und X für Wasserstoff, Natrium oder Kalium steht, durch Umsetzung des Aminomethylgruppen-haltigen, sulfonierten Perlpolymerisat aus Verfahrensschritt c) in wässriger Suspension mit Chloressigsäure oder ihren Derivaten. Ein insbesondere bevorzugtes Chloressigsäurederivat ist das Natriumsalz der Chloressigsäure.

Das Natriumsalz der Chloressigsäure wird bevorzugt als wässrige Lösung eingesetzt.

Die wässrige Lösung des Natriumsalzes der Chloressigsäure wird bei der Reaktionstemperatur innerhalb von 0,5 bis 15 Stunden in die vorgelegte wässrige Suspension des Aminomethylgruppen-haltigen, sulfonierten Perlpolymerisat dosiert. Bevorzugt erfolgt die Dosierung bevorzugt innerhalb von 5 bis 11 Stunden .

Die bei der Umsetzung der aminomethylgruppen haltigen, sulfonierten Perlpolymerisate mit Chloressigsäure freiwerdende Salzsäure wird durch Zugabe von Natronlauge teilweise oder ganz neutralisiert, sodass der pH Wert der wässrigen Suspension bei dieser Reaktion im Bereich zwischen pH 5 bis 10,5 eingestellt wird. Bevorzugt wird die Reaktion bei pH 9,5 durchgeführt.

Die Reaktion der Aminomethylgruppen-haltigen, sulfonierten Perlpolymerisate mit Chloressigsäure wird bei Temperaturen im Bereich zwischen 50 und 100 °C durchgeführt. Bevorzugt erfolgt die Reaktion der Aminomethylgruppen-haltigen, sulfonierten Perlpolymerisate mit Chloressigsäure bei Temperaturen im Bereich zwischen 80 und 95°C .

Als Suspensionsmedium wird Wasser oder wässrige Salzlösung eingesetzt. Als Salze kommen Alkalimetallsalze insbesondere NaCl und Natriumsulfat in Frage.

Bevorzugt erfolgt die Herstellung der erfindungsgemäßen Chelatharzen funktionellen Gruppen des Strukturelements (I), wobei $R_1$ und $R_2$ unabhängig voneinander = $-CH_2PO(OX^1)_2$, $-CH_2PO(OH)OX^2$ oder Wasserstoff sind, aber beide nicht gleichzeitig für Wasserstoff stehen können und $X^1$ und $X^2$ unabhängig voneinander für Wasserstoff, Natrium oder Kalium steht, durch Umsetzung des Aminomethylgruppen-haltigen Perlpolymerisat aus Verfahrensschritt c) in schwefelsaure Suspension mit Formalin in Kombination mit P-H aciden (nach modifizierter Mannich Reaktion) Verbindungen, bevorzugt mit phosphoriger Säure, Monoalkylphosphorigsäureester, oder Dialkylphosphorigsäureester.

Besonders bevorzugt wird Formalin in Kombination mit P-H aciden Verbindungen wie phosphorige Säure oder Dimethylphosphit eingesetzt.

Die Umsetzung des Aminomethylgruppen-haltigen Perlpolymerisates zu Chelatharzen enthaltend funktionelle Gruppen des Strukturelements (I) erfolgt, in dem Fall, dass $R_1$ und $R_2$ unabhängig voneinander = $-CH_2PO(OX^1)_2$, $-CH_2PO(OH)OX^2$ oder Wasserstoff sind, aber beide nicht gleichzeitig für Wasserstoff stehen können und $X^1$ und $X^2$ unabhängig voneinander für Wasserstoff, Natrium oder Kalium steht, bevorzugt bei Temperaturen im Bereich von 70 bis 120 °C, besonders bevorzugt bei Temperaturen im Bereich zwischen 90 und 110°C .

Bevorzugt erfolgt die Herstellung der erfindungsgemäßen Chelatharz enthaltend funktionelle Gruppen des Strukturelements (I), wobei $R_1$ und $R_2$ unabhängig voneinander = $-CH_2$-Pyridyl oder Wasserstoff sind, aber beide nicht gleichzeitig für Wasserstoff stehen können, im Verfahrensschritt d) durch Umsetzung des Perlpolymerisat aus Verfahrensschritt c) in wässriger Suspension mit Chlormethylpyridin bzw. seinem Hydrochlorid oder mit 2-Chlormethylchinolin oder 2-Chlormethylpiperidin.

Chlormethylpyridin bzw. sein Hydrochlorid kann als 2-Chlormethylpyridin, 3-Chlormethylpyridin oder 4-Chlormethylpyridin eingesetzt werden.

Die Umsetzung im Verfahrensschritt d) erfolgt dann, wenn das Strukturelement (I) ein $-CH_2$-Pyridylrest darstellt, bevorzugt unter Einhaltung eines pH-Wertes im Bereich von 4 bis 9, und wird bevorzugt unter Zugabe von Alkali durchgeführt, besonders bevorzugt von Kalilauge oder Natronlauge, insbesondere bevorzugt von Natronlauge. Durch Zugabe von Alkali bei der Umsetzung des Aminomethylgruppenhaltigen, sulfonierten Perlpolymerisat aus Verfahrensschritt c) in wässriger Suspension mit Picolylchlorid oder seinem Hydrochlorid, wird der pH Wert bei der Umsetzung bevorzugt im Bereich 4-9 gehalten. Besonders bevorzugt wird der pH Wert im Bereich 6-8 gehalten.

Die Umsetzung gemäß Verfahrensschritt d) erfolgt dann, wenn das Strukturelement (I) ein Picolylaminrest darstellt, bevorzugt im Temperaturbereich von 40 bis 100°C, besonders bevorzugt im Temperaturbereich von 50 bis 80°C.

Bevorzugt erfolgt die Herstellung der erfindungsgemäßen Chelatharzen enthaltend funktionelle Gruppen des Strukturelements (I), wobei $R_1$ und $R_2$ unabhängig voneinander = $-(CS)NH_2$ oder Wasserstoff sind, aber beide nicht gleichzeitig für Wasserstoff stehen können, durch Umsetzung des Aminomethylgruppen-haltigen, sulfonierten, Perlpolymerisat aus Verfahrensschritt c) in salzsäuresaurer Suspension mit Thioharnstoff oder substituierten Thioharnstoffen oder Salzen der Thiocyansäure. Als Suspensionsmedium werden Mineralsäuren, bevorzugt wässrige Salzsäure in Konzentrationen zwischen 10 und 40 Gew.-% bevorzugt 20 - 35 Gew.-% angewandt.

Die Reaktionstemperatur für die Herstellung der erfindungsgemäßen Chelatharze enthaltend funktionelle Gruppen des Strukturelements (I) falls dieses mindestens eine Thioharnstoffsäuregruppe beinhaltet liegt zwischen 110 und 170 °C bevorzugt zwischen 135 und 155°C, die Reaktionsdauer beträgt 4 bis 20 Stunden bevorzugt 8 bis 15 Stunden.

Überraschenderweise lassen sich durch das erfindungsgemäße Verfahren Chelatharze enthaltend funktionelle Gruppen des Strukturelements (I) erzeugen, die eine verbesserte Adsorption für Metalle aufweisen. Bevorzugt sind die Chelatharze enthaltend funktionelle Gruppen des Strukturelements (I) besonders zur Adsorption von Schwermetallen, Edelmetallen und Seltene Erden und deren zwei-, drei- oder vierwertige Ionen geeignet. Schwermetalle und Edelmetalle im Sinne der vorliegenden Erfindung sind bevorzugt Quecksilber, Gallium, Eisen, Kobalt, Nickel, Kupfer, Zink, Blei, Indium, Cadmium, Mangan, Uran, Vanadium, Elemente der Platingruppe sowie Gold oder Silber.

Seltene Erden im Sinne der vorliegenden Erfindung sind bevorzugt Scandium, Lanthan, Cer, Praseodym, Neodym, Promethium, Samarium, Europium, Yttrium, Gadolinium, Terbium, Dysprosium, Holmium, Erbium, Thulium,

Ytterbium, Lutetium Scandium, Yttrium und Lanthan und deren zwei-, drei- oder/und vierwertige Ionen. Besonders bevorzugt sind die erfindungsgemäßen Chelatharze enthaltend funktionelle Gruppen des Strukturelements (I) zur Adsorption von Seltenen Erden geeignet. Ganz besonders bevorzugt sind die erfindungsgemäßen Chelatharze enthaltend funktionelle Gruppen des Strukturelements (I) zur Adsorption von Indium, Scandium, Neodym, Lanthan und Praseodym geeignet.

Die erfindungsgemäßen Chelatharze enthaltend funktionelle Gruppen des Strukturelements (I) eignen sich deshalb hervorragend für die Gewinnung und Aufreinigung von Metallen, bevorzugt von Schwermetallen, Edelmetallen und Seltenen Erden und besonders bevorzugt für die Adsorption von Seltenen Erden und ihrer Verbindungen aus wässrigen Lösungen und organischen Flüssigkeiten. Die vorliegende Erfindung betrifft deshalb ebenfalls die Verwendung der erfindungsgemäßen Chelatharze enthaltend funktionelle Gruppen des Strukturelements (I) zur Adsorption von Metallen, bevorzugt von Schwermetallen, Edelmetallen und Seltenen Erden und ihren Verbindungen aus wässrigen Lösungen und organischen Flüssigkeiten.

Zudem wird im Stand der Technik vorgeschlagen, Solar-Silizium mittels carbothermischer Reduktion von Siliziumdioxid herzustellen. Diesbezüglich schlägt zum Beispiel die WO2007/106860 A1 vor, hochreine Kieselgele durch Umsetzung mit einer hochreinen Kohlenstoffquelle in Solar-Silizium umzuwandeln. Das zur Durchführung derartiger Verfahren benötigte hochreine Siliziumdioxid wird bevorzugt durch Umsetzung einer Silikatlösung mit einem Säuerungsmittel hergestellt, im Rahmen derer auch Chelatharze eingesetzt werden; bevorzugt Chelatharze die als funktionelle Gruppen Phosphonsaure- bzw. Phosphonatgruppen enthalten. Daher ist von der Erfindung ebenfalls die Verwendung der erfindungsgemäßen Chelatharze enthaltend funktionelle Gruppen des Strukturelements (I) in einem Verfahren zur Herstellung und Aufreinigung von Silizium, bevorzugt von Silizium mit einer Reinheit von größer 99,99 %, umfasst. Bevorzugt werden in dem Verfahren zur Herstellung und Aufreinigung von Silizium Chelatharze enthaltend funktionelle Gruppen des Strukturelements (I) eingesetzt, wobei mindestens ein Rest $R_1$ oder $R_2$ unabhängig voneinander = $-CH_2PO(OX^1)_2$ oder $-CH_2PO(OH)OX^2$ ist und $X^1$ und $X^2$ unabhängig voneinander für Wasserstoff, Natrium oder Kalium steht.

Mit dem erfindungsgemäßen Verfahren können erstmals kostengünstig, neue stabile, sulfonierte Chelatharze mit spezifischen Adsorptionseigenschaften hergestellt werden.

**Analytische Bestimmung der chelatisierenden Gruppen und der stark sauren Sulfonsäuregruppen**

Bestimmung der Menge an chelatisierenden Gruppen - Totalkapazität (TK) des Harzes 100 ml Austauscher werden in eine Filtersäule gefüllt und mit 3 Gew.-%iger Salzsäure in 1,5 Stunden eluiert. Dann wird mit vollentsalztem Wasser gewaschen bis der Ablauf neutral ist.

50 ml regenerierter Ionenaustauscher werden in einer Säule mit 0,1 N Natronlauge beaufschlagt. Den Ablauf fängt man jeweils in einem 250 ml Messkolben auf und titriert die gesamte Menge gegen Methylorange mit 1 N Salzsäure.

Es wird solange aufgegeben, bis 250 ml Ablauf einen Verbrauch von 24,5-25 ml an 1N Salzsäure haben. Nach beendeter Prüfung bestimmt man das Volumen des Austauschers in der Na-Form.

$$\text{Totalkapazität (TK)} = (X \cdot 25 - \Sigma V)\text{-}3 \text{ in mol/l Austauscher.}$$

X = Zahl der Ablauffraktion

$\Sigma V$ = Gesamtverbrauch in ml an 1n Salzsäure bei der Titration der Abläufe.

**Bestimmung der Menge an stark sauren Gruppen**

**TK-Na+-Form**

| | |
|---|---|
| 100 ml | Austauscher werden auf dem Stampfvolumeter unter VE-Wasser eingemessen und in ein Filterrohr gespült. Anschließend werden |
| 1000 ml | Natriumchlorid-Lsg. w ( NaCL ) = 10 % überfiltriert. |

Dann wird bei gleicher Durchlaufgeschwindigkeit mit VE-Wasser bis zur neutralen Reaktion ausgewaschen. Dabei sollen 100 ml des Waschwasserablaufs, mit Methylorange versetzt, einen Verbrauch an Natronlauge c (NaOH) = 0,1 Mol / L von höchstens 0,1ml haben.

Anschließend werden

| | |
|---|---|
| 50 ml | Austauscher auf dem Stampfvolumeter unter VE-Wasser eingemessen und in ein Filterrohr gespült. Nun werden |
| 300 ml | Salzsäure w ( HCL ) = 15 % überfiltriert |

Dann wird mit VE-Wasser bis zur neutralen Reaktion ausgewaschen. Dabei sollen 100 ml Waschwasserablauf, mit Methylorange versetzt, einen Verbrauch an Natronlauge c ( NaOH) = 0,1 Mol / L von höchstens 0,1 ml haben.

Nun werden

| | |
|---|---|
| 950 ml | Natriumchlorid-Lsg. w ( NaCL ) = 2,5 % überfiltriert. Der Ablauf wird in einem 1000 ml Messkolben aufgefangen und mit VE-Wasser bis zur Marke aufgefüllt. |
| 10 ml | der gut durchgemischten Lösung werden in einem 300 ml Erlenmeyerkolben mit ca. 90 ml VE-Wasser verdünnt und gegen Methylorange mit Natronlauge c ( NaOH ) = 0,1 Mol/L von rot/orange nach gelb titriert. Der Austauscher wird mit einen Liter VE-Wasser gewaschen und dann das Volumen bestimmt. |

**TK-H-Form**

Bei Austauschern, die in der H-Form vorliegen, wird die "TK" ohne und mit Regenerierung bestimmt.

| | |
|---|---|
| 50 ml | der Lieferform werden eingebaut und mit |
| 100 ml | Mischbettwasser gewaschen. |

Anschließend läuft 950 ml Natriumchlorid-Lsg. w (NaCL) = 2,5 % über.
Dann wäscht man mit einem Liter VE-Wasser aus und überführt den Austauscher, wie zu Anfang der Vorschrift beschrieben mit

| | |
|---|---|
| 300 ml | Salzsäure w ( HCL ) = 15 % in die H-Form. Die Säure wird ausgewaschen und es laufen wieder 950 ml Natriumchlorid-Lsg. w ( NaCL ) = 2,5 % über. |

**Berechnungen**

$$\text{Auf die Na-Form:}\frac{\text{verbrauchte ml Natronlauge c( NaOH ) = 0,1 Mol/l}\cdot 10}{\text{ml Austauschervolumen in der Na-Form}}$$

= mol/L Aust.

$$\text{Auf die H-Form:}\frac{\text{verbrauchte ml Natronlauge c( NaOH ) = 0,1 Mol/l}\cdot 10}{50}$$

= mol/L Aust.

**Beispiel 1**

**a.) Herstellung des monodispersen, makroporösen Perlpolymerisates auf der Basis von Styrol, Divinylbenzol und Ethylstyrol**

In einem 10 l Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von

mikroverkapselten Monomertröpfchen mit enger Teilchengrößenverteilung aus 5 Gew.-% Divinylbenzol und 1 Gew.-% Ethylstyrol (eingesetzt als handelsübliches Isomerengemisch aus Divinylbenzol und Ethylstyrol mit 80 % Divinylbenzol), 0,4 Gew.-% Dibenzoylperoxid, 56,3 Gew.-% Styrol und 37,5 Gew. % Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 μm-Sieb gewaschen und anschließend im Vakuum bei 80°C getrocknet.

Man erhält 1893 g eines monodispersen Perlpolymerisates mit glatter Oberfläche.

Das monodispersen Perlpalymerisates ist in der Aufsicht kreidig weiß und weist eine Schüttdichte von ca. 390 g/l auf.

**b.) Herstellung eines phthalimidomethylierten Harzes mit zusätzlich $SO_3H$ Gruppen-Molverhältnis freies $SO_3$ zu Phthalimid wie 0,7 zu 1 bei der Phthalimidomethylierung**

419,3 g Phthalimid, 1410 g 1,2-Dichlorethan (DCE) und 242,5 g Formaldehyd-Lsg. 30 gew.-%ig werden bei RT in einem Vierhalskolben vorgelegt und auf Siedetemperatur erhitzt.

Bei beginnendem Rückfluss (ca. 70°C) wird mit Natronlauge, ω (NaOH)= 50 %, der pH-Wert auf 5,5 - 6,0 eingestellt. Es wird 30 min bei Siedetemperatur gekocht. Danach wird das Wasser ausgekreist. Danach gibt man bei ca. 70°C, 30,7 g Monohydrat hinzu.

Anschließend wird erneut Wasser ausgekreist bis der Ether vorliegt. Danach wird bis zu 12 h bei RT gerührt und dann werden bei 25-30°C, 245,7 g Oleum, ω ($SO_3$ frei)= 65 %, zudosiert.

Anschließend werden bei 30-40°C, 317,1 g monodisperses Perlpolymerisat aus Beispiel 1 in 1000 ml DCE hinzugegeben. Die Mischung wird 6,5 h bei 65°Cgerührt.

Über ein Filtersaugrohr wird die DCE-Brühe abgesaugt, und das Filtrat mit vortemperiertem VE-Wasser (max. 70°C) neu angeschlämmt und das restliche DCE abdestilliert.

Im Anschluss wird das Harz mit VE-Wasser ausgewaschen.

Volumenausbeute = 1900 ml Harz

Trockengewicht = 0,3932g/ml

Elementaranalyse:

Stickstoffgehalt: 5,0 Gew. %

Schwefelgehalt: 3,1 Gew. %

**c.) Herstellung eines Aminomethylgruppen-haltigen Harzes mit zusätzlich $SO_3H$ Gruppen**

2100 ml eines Harzes hergestellt gemäß Beispiel 1b), 2520 ml Natronlauge hergestellt aus 767 g 50 Gew.-% iger Natronlauge und 2140 ml Wasser, werden bei RT in einen 6l-VA-Autoklaven eingefüllt.

Dann wird bei 200 U/min der Autoklav in 2 h auf 180°C hochgeheizt.

Bei dieser Temperatur wird der Autoklav 8 h gehalten.

Nach dem Abkühlen wird das Versuchsprodukt mit VE-Wasser neutral gewaschen.

Volumenausbeute = 1571 ml

| HCl-Zahl | Lieferform | Cl-Form | OH-Form |
|---|---|---|---|
| 1,29 mol/l | 30 ml | 38 ml | 31 ml |

Waschwasser = > 0,5 L/30ml
Substitution = 0,63
Trockengewicht = 0,2696 g/ml

**d.) Herstellung eines Harzes mit Aminomethylphosphonsäuregruppen und zusätzlich $SO_3H$ Gruppen**

1520 ml Harz aus Beispiel 1c) wird zusammen mit 759 ml VE-Wasser bei Raumtemperatur im Rundkolben vorgelegt. Nun werden in 15 min 701,6 g Dimethylphosphit zugetropft und15 min nachgerührt. Innerhalb von 2h werden nun 1962 g, 98 Gew.-% ige Schwefelsäure zudosiert. Hiernach wird auf 95°C aufgeheizt. Bei 95°C werden 716 g 30 gew.-%ige Formaldehyd-Lösung zugetropft. Es werden weitere 4h bei 95°C gerührt. Nach dem Abkühlen wird das Harz mit VE-Wasser neutral gewaschen.
Volumenausbeute = 1870 ml

Das Harz wird mit Natronlauge, ω (NaOH) = 4 %, in die Freie-Basen-Form umgeladen.
Volumenausbeute = 2680 ml
NaOH-Zahl: 2,78 mol/l

Die Anwesenheit von chelatisierenden Aminomethylphosphonsäuregruppen wird durch die NaOH Zahl wiedergegeben. Pro Liter Endprodukt sind 2,78 mol Aminomethylphosphonsäuregruppen vorhanden
NaCl-Zahl: 0,79

Die Anwesenheit von stark sauren Sulfonsäuregruppen wird durch die NaCl - Zahl und durch den Schwefelgehalt von 5,0 Gew. %.wiedergegeben .

Pro Liter Endprodukt sind 0,79 mol Sulfonsäuregruppen vorhanden .

Elementaranalytische Zusammensetzung des Endproduktes
ω (N)=4,6 Gew. % w (P)=8,3 Gew. % ω (O)=27,0 Gew. % ω (S)= 5,0 Gew. %

Tabelle 1

| Versuch | Strukturelemente | Mol freies $SO_3$ pro mol Phthalimid | Endprodukt Gew. % Schwefel | Endprodukt Gew. % Sauerstoff | Endprodukt Gew. % Stickstoff | Endprodukt Gew. % Phosphor | Menge chelatisierender Gruppen in mol/ Liter Harz | Menge an stark sauren Gruppen in mol / Liter Harz |
|---|---|---|---|---|---|---|---|---|
| Beispiel 1 | Sulfonsäuregruppen und Aminomethylphosphon säuregruppen | 0,7 zu 1 | 5,0 | 27,0 | 4,6 | 8,3 | 2,78 | 0,79 |

Zusammenfassung der Ergebnisse aus Beispiel 1

**Patentansprüche**

1. Chelatharze enthaltend funktionelle Gruppen des Strukturelements (I)

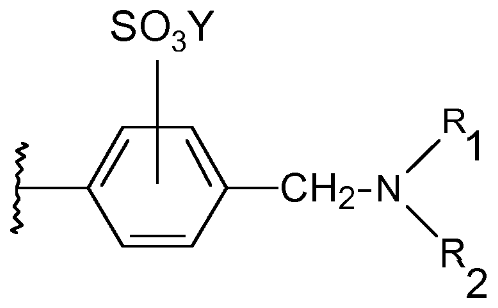

(I)

worin 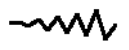 für das Polymergerüst steht und $R_1$ und $R_2$ unabhängig voneinander für $-CH_2COOX$, $-CH_2PO(OX^1)_2$, $-CH_2PO(OH)OX^2$, $-(CS)NH_2$, $-CH_2$-Pyridyl oder Wasserstoff stehen, wobei $R_1$ und $R_2$ nicht beide gleichzeitig Wasserstoff sein können und X, $X^1$, $X^2$ und Y unabhängig voneinander für Wasserstoff, Natrium oder Kalium stehen.

2. Chelatharze enthaltend funktionelle Gruppen des Strukturelements (I) gemäß Anspruch 1, wobei $R_1$ und $R_2$ unabhängig voneinander = $-CH_2PO(OX^1)_2$, $-CH_2PO(OH)OX^2$ oder Wasserstoff sind und $X^1$ und $X^2$ unabhängig voneinander für Wasserstoff, Natrium oder Kalium stehen.

3. Verfahren zur Herstellung der Chelatharze enthaltend funktionelle Gruppen des Strukturelements (I) gemäß Anspruch 1, **dadurch gekennzeichnet, dass** man

   a) Monomertröpfchen aus wenigstens einer monovinylaromatischen Verbindung und wenigstens einer polyvinylaromatischen Verbindung sowie wenigstens einem Initiator oder einer Initiatorkombination zu einem Perlpolymerisat umsetzt,
   b) das Perlpolymerisat mit Phthalimid in Gegenwart von Oleum phthalimidomethyliert und sulfoniert wird, wobei die Menge an freiem $SO_3$ mindestens 0,69 mol bezogen auf 1 mol Phthalimid ist,
   c) das phthalimidomethylierte, sulfonierte Perlpolymerisat zu aminomethyliertem, sulfonierten Perlpolymerisat umsetzt und
   d) das aminomethylierte, sulfonierte Perlpolymerisat zu Chelatharzen enthaltend funktionelle Gruppen des Strukturelements (I) reagieren lässt.

4. Verfahren zur Herstellung der Chelatharz enthaltend funktionelle Gruppen des Strukturelements (I) gemäß Anspruch 3, **dadurch gekennzeichnet, dass** die Perlpolymerisate in Schritt a) monodispers und dadurch monodisperse Chelatharze hergestellt werden.

5. Verfahren zur Herstellung der Chelatharze mit funktionellen Gruppen des Strukturelements (I) gemäß Anspruch 3 oder 4, **dadurch gekennzeichnet, dass** die Menge an freiem $SO_3$ in Schritt b) zwischen 0,69 und 1,5 mol bezogen auf 1 Mol Phthalimid ist.

6. Verfahren zur Herstellung der Chelatharz enthaltend funktionelle Gruppen des Strukturelements (I) gemäß mindestens einem der Ansprüche 3 bis 5, **dadurch gekennzeichnet, dass** die Menge an freiem $SO_3$ in Schritt b) zwischen 0,69 und 1,2 mol bezogen auf 1 Mol Phthalimid ist.

7. Chelatharze enthaltend funktionelle Gruppen des Strukturelements (I) hergestellt gemäß Anspruch 3.

8. Verwendung der Chelatharze der Ansprüche 1 oder 7 zur Adsorption von Metallen.

9. Verwendung gemäß Anspruch 8, **dadurch gekennzeichnet, dass** die Adsorption der Metalle aus wässrigen Lösungen oder organischen Flüssigkeiten erfolgt.

**10.** Verwendung gemäß einem der Ansprüche 8 oder 9, **dadurch gekennzeichnet, dass** die Metalle ausgewählt sind aus der Gruppe Quecksilber, Gallium, Eisen, Kobalt, Nickel, Kupfer, Zink, Blei, Indium, Cadmium, Mangan, Uran, Vanadium, Elemente der Platingruppe sowie Gold oder Silber oder aus den Seltenen Erden.

**11.** Verwendung gemäß einem der Ansprüche 8 bis 10, **dadurch gekennzeichnet, dass** die Metalle Seltene Erden sind.

**12.** Verwendung gemäß Anspruch 11, **dadurch gekennzeichnet, dass** es sich bei den Seltenen Erden um Scandium, Lanthan, Cer, Praseodym, Neodym, Promethium, Samarium, Europium, Yttrium, Gadolinium, Terbium, Dysprosium, Holmium, Erbium, Thulium, Ytterbium, Lutetium Scandium, Yttrium und Lanthan. handelt.

**13.** Verwendung gemäß einem der Ansprüche 8 bis 12, **dadurch gekennzeichnet, dass** die Metalle ausgewählt sind aus der Gruppe Indium, Scandium, Neodym, Lanthan und Praseodym.

**14.** Verwendung der Chelatharze enthaltend funktionelle Gruppen des Strukturelements (I) aus Anspruch 1 oder 7 zur Herstellung und Aufreinigung von Silizium.

**15.** Verwendung der Chelatharze gemäß Anspruch 14, **dadurch gekennzeichnet, dass** Chelatharze enthaltend funktionelle Gruppen des Strukturelements (I) wobei $R_1$ und $R_2$ unabhängig voneinander = $-CH_2PO(OX^1)_2$ oder $-CH_2PO(OH)OX^2$ und $X^1$ und $X^2$ unabhängig voneinander für Wasserstoff, Natrium oder Kalium stehen.

## Claims

**1.** Chelating resins comprising functional groups of structural element (I)

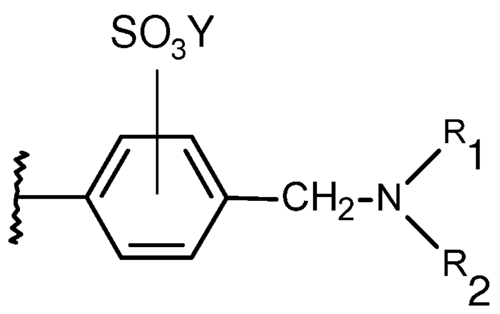

(I)

in which represents the polymer skeleton and $R_1$ and $R_2$ independently of one another represent $-CH_2COOX$, $-CH_2PO(OX^1)_2$, $-CH_2PO(OH)OX^2$, $-(CS)NH_2$, $-CH_2$-pyridyl or hydrogen, wherein $R_1$ and $R_2$ cannot both simultaneously be hydrogen and X, $X^1$, $X^2$ and Y independently of one another represent hydrogen, sodium or potassium.

**2.** Chelating resins comprising functional groups of structural element (I) according to Claim 1, wherein $R_1$ and $R_2$ independently of one another are $-CH_2PO(OX^1)_2$, $CH_2PO(OH)OX^2$ or hydrogen and $X^1$ and $X^2$ independently of one another represent hydrogen, sodium or potassium.

**3.** Process for preparing the chelating resins comprising functional groups of structural element (I) according to Claim 1, **characterized in that** it comprises

a) converting monomer droplets composed of at least one monovinylaromatic compound and at least one polyvinylaromatic compound and at least one initiator or an initiator combination into a bead polymer,
b) phthalimidomethylating and sulfonating the bead polymer with phthalimide in the presence of oleum, wherein the amount of free $SO_3$ is at least 0.69 mol based on 1 mol of phthalimide,
c) converting the phthalimidomethylated, sulfonated bead polymer into aminomethylated, sulfonated bead polymer and
d) reacting the aminomethylated, sulfonated bead polymer to afford chelating resins comprising functional

groups of structural element (I).

4. Process for preparing the chelating resin comprising functional groups of structural element (I) according to Claim 3, **characterized in that** the bead polymers in step a) are prepared in monodisperse form and thus monodisperse chelating resins are prepared.

5. Process for preparing the chelating resins having functional groups of structural element (I) according to Claim 3 or 4, **characterized in that** the amount of free $SO_3$ in step b) is between 0.69 and 1.5 mol based on 1 mol of phthalimide.

6. Process for preparing the chelating resin comprising functional groups of structural element (I) according to at least one of Claims 3 to 5, **characterized in that** the amount of free $SO_3$ in step b) is between 0.69 and 1.2 mol based on 1 mol of phthalimide.

7. Chelating resins comprising functional groups of structural element (I) prepared according to Claim 3.

8. Use of the chelating resins of Claims 1 or 7 for adsorption of metals.

9. Use according to Claim 8, **characterized in that** the adsorption of the metals is effected from aqueous solutions or organic liquids.

10. Use according to either of Claims 8 and 9, **characterized in that** the metals are selected from the group mercury, gallium, iron, cobalt, nickel, copper, zinc, lead, indium, cadmium, manganese, uranium, vanadium, elements of the platinum group and gold or silver or from the rare earths.

11. Use according to any of Claims 8 to 10, **characterized in that** the metals are rare earths.

12. Use according to Claim 11, **characterized in that** the rare earths are scandium, lanthanum, cerium, praseodymium, neodymium, promethium, samarium, europium, yttrium, gadolinium, terbium, dysprosium, holmium, erbium, thulium, ytterbium, lutetium, scandium, yttrium and lanthanum.

13. Use according to any of Claims 8 to 12, **characterized in that** the metals are selected from the group indium, scandium, neodymium, lanthanum and praseodymium.

14. Use of the chelating resins comprising functional groups of structural element (I) from Claim 1 or 7 for preparation and purification of silicon.

15. Use of the chelating resins according to Claim 14, **characterized in that** chelating resins comprising functional groups of structural element (I), wherein $R_1$ and $R_2$ independently of one another are $-CH_2PO(OX^1)_2$ or $-CH_2PO(OH)OX^2$ and $X^1$ and $X^2$ independently of one another represent hydrogen, sodium or potassium.

**Revendications**

1. Résines chélatées contenant des groupes fonctionnels de l'élément structural (I)

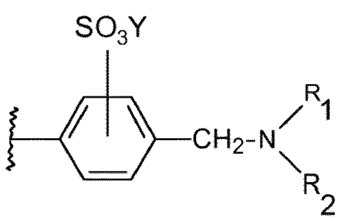

(I)

dans lequel 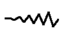 représente le squelette polymère et $R_1$ et $R_2$ représentent indépendamment l'un de l'autre $-CH_2COOX$, $-CH_2PO(OX^1)_2$, $-CH_2PO(OH)OX^2$, $-(CS)NH_2$, $-CH_2$-pyridyle ou hydrogène, $R_1$ et $R_2$ ne pouvant pas représenter tous les deux simultanément l'hydrogène, et X, $X^1$, $X^2$ et Y représentent indépendamment les uns des

autres hydrogène, sodium ou potassium.

**2.** Résines chélatées contenant des groupes fonctionnels de l'élément structural (I) selon la revendication 1, dans lesquelles $R_1$ et $R_2$ = indépendamment l'un de l'autre $-CH_2PO(OX^1)_2$, $-CH_2PO(OH)OX^2$ ou hydrogène, et $X^1$ et $X^2$ représentent indépendamment l'un de l'autre hydrogène, sodium ou potassium.

**3.** Procédé de fabrication des résines chélatées contenant des groupes fonctionnels de l'élément structural (I) selon la revendication 1, **caractérisé en ce que**

a) des gouttelettes monomères constituées par au moins un composé monovinyle aromatique et au moins un composé polyvinyle aromatique, ainsi qu'au moins un initiateur ou une combinaison d'initiateurs sont transformées en un polymère en perles,
b) le polymère en perles est phtalimido-méthylé et sulfoné avec du phtalimide en présence d'oléum, la quantité de $SO_3$ libre étant d'au moins 0,69 mole par rapport à 1 mole de phtalimide,
c) le polymère en perles sulfoné et phtalimido-méthylé est transformé en un polymère en perles sulfoné et aminométhylé, et
d) le polymère en perles sulfoné et aminométhylé est laissé réagir pour former des résines chélatées contenant des groupes fonctionnels de l'élément structural (I).

**4.** Procédé de fabrication de la résine chélatée contenant des groupes fonctionnels de l'élément structural (I) selon la revendication 3, **caractérisé en ce que** les polymères en perles à l'étape a) sont fabriqués sous forme monodispersée et des résines chélatées monodispersées sont ainsi fabriquées.

**5.** Procédé de fabrication des résines chélatées contenant des groupes fonctionnels de l'élément structural (I) selon la revendication 3 ou 4, **caractérisé en ce que** la quantité de $SO_3$ libre à l'étape b) est comprise entre 0,69 et 1,5 mole, par rapport à 1 mole de phtalimide.

**6.** Procédé de fabrication de la résine chélatée contenant des groupes fonctionnels de l'élément structural (I) selon au moins l'une quelconque des revendications 3 à 5, **caractérisé en ce que** la quantité de $SO_3$ libre à l'étape b) est comprise entre 0,69 et 1,2 mole par rapport à 1 mole de phtalimide.

**7.** Résines chélatées contenant des groupes fonctionnels de l'élément structural (I), fabriquées selon la revendication 3.

**8.** Utilisation des résines chélatées selon la revendication 1 ou 7 pour l'adsorption de métaux.

**9.** Utilisation selon la revendication 8, **caractérisée en ce que** l'adsorption des métaux a lieu à partir de solutions aqueuses ou de liquides organiques.

**10.** Utilisation selon l'une quelconque des revendications 8 ou 9, **caractérisée en ce que** les métaux sont choisis dans le groupe constitué par le mercure, le gallium, le fer, le cobalt, le nickel, le cuivre, le zinc, le plomb, l'indium, le cadmium, le manganèse, l'uranium, le vanadium, les éléments du groupe du platine, ainsi que l'or ou l'argent ou parmi les terres rares.

**11.** Utilisation selon l'une quelconque des revendications 8 à 10, **caractérisée en ce que** les métaux sont des terres rares.

**12.** Utilisation selon la revendication 11, **caractérisée en ce que** les terres rares sont le scandium, le lanthane, le cérium, le praséodyme, le néodyme, le prométhium, le samarium, l'europium, l'yttrium, le gadolinium, le terbium, le dysprosium, l'holmium, l'erbium, le thulium, l'ytterbium, le lutétium, le scandium, l'yttrium et le lanthane.

**13.** Utilisation selon l'une quelconque des revendications 8 à 12, **caractérisée en ce que** les métaux sont choisis dans le groupe constitué par l'indium, le scandium, le néodyme, le lanthane et le praséodyme.

**14.** Utilisation des résines chélatées contenant des groupes fonctionnels de l'élément structural (I) selon la revendication 1 ou 7 pour la fabrication et la purification de silicium.

**15.** Utilisation des résines chélatées selon la revendication 14, **caractérisée en ce que** les résines chélatées contenant des groupes fonctionnels de l'élément structural (I) dans lequel $R_1$ et $R_2$ = indépendamment l'un de l'autre $-CH_2PO(OX^1)_2$ ou $-CH_2PO(OH)OX^2$, et $X^1$ et $X^2$ représentent indépendamment l'un de l'autre hydrogène, sodium ou potassium.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2013139649 A1
- EP 1078690 A
- US 4382124 A
- EP 0046535 A
- US 444961 A4
- US 4419245 A
- WO 9312167 A
- WO 2007106860 A1